# EUROPEAN PATENT APPLICATION

(11) **EP 2 584 755 A1**
(43) Date of publication of application: **24.04.2013**
(21) Application number: 11306351.5
(22) Date of filing: 19.10.2011
(51) Int. Cl.: H04L 29/06

(54) **Method of sending a command to a secure element**

(71) Applicant: Gemalto SA, 92190 Meudon (FR)
(72) Inventor: Joubert, Nicolas, 13600 La Ciotat (FR); Roussel, Nicolas, 13590 Meyreuil (FR)

(57) **Abstract**

The invention is a method of sending a file-oriented command to a secure element. The file-oriented command is encapsulated in an application-oriented command by a distant server and sent to the secure element. The secure element is able to check if the received application-oriented command contains a preset identifier in order to rebuild and execute the file-oriented command.

## Description

### (Field of the invention)

The present invention relates to the methods of sending a command to a secure element. It relates particularly to methods of sending a file-oriented command to a secure element.

### (Prior art)

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or fixed to a host machine. For example, smart cards are a kind of secure elements.

A secure element may contain applications, applicative data, file systems and secret data. The files may be accessed by a remote server via an over the air channel, known as OTA. The secure element may also be accessed by a server through a wired network, like Internet for instance. OTA mechanism is defined by the ETSI SCP 102 225, ETSI-SCP 102 226, 3GPP 31.115, 3GPP 31.116 and GlobalPlatform version 2.2 for RAM standards. Only secure elements intended to be used in Telecom domain or Machine-To-Machine (M2M) domain are able to manage an OTA communication. These secure elements may also be accessed through the HyperText Transfer Protocol, usually called HTTP or HTTPS for the secure mode. The GlobalPlatform ® 2.2 standard (Amendment B "RAM over HTTP") and the ETSI 102 226 standard ("RFM over HTTP") have defined an administration protocol for the OTA administration of the Smart Card content. The Remote Application Management (RAM) mechanism is specifically designed for accessing applications and the Remote File Management (RFM) mechanism is specifically designed for accessing files in a secure element. RAM and RFM mechanisms are suitable for smart cards. For each kind of secure elements, other application-oriented or file-oriented mechanisms exist. Each mechanism has its own security layer. These security layers are distinct and may provide different level of security. In other words, the robustness of each security layer can significantly differ.

There is a need for increasing the security level for sending file-oriented commands to a secure element.

### (Summary of the Invention)

An object of the invention is to solve the above mentioned technical problem.

The object of the present invention is a method of sending a file-oriented command to a secure element comprising both first and second means. First means is able to run application-oriented commands and second means is able to run file-oriented commands. The method comprises the steps of:
a) in a server, generating an application-oriented command by encapsulating the file-oriented command, the application-oriented command having a body,
b) sending the application-oriented command to the secure element,
c) generating a clear body by deciphering the body by said first means, and
d) if the clear body contains an element having a preset value, then building the file-oriented command from the clear body and forwarding the file-oriented command from said first means to said second means.

Advantageously, the method may comprise the further steps of:
e) executing the file-oriented command by said second means and generating a response to the file-oriented command, and
f) sending the response to the server via said first means.

Advantageously, said first means may comply with Remote Application Management as defined by ETSI 102 226 standard and said second means may comply with Remote File Management as define d by ETSI 102 226 standard.

Advantageously, the file-oriented command may be forwarded to second means through a file-oriented script and the application-oriented command may be sent to the secure element through an application-oriented script.

Another object of the invention is a secure element intended to receive an application-oriented command which comprises a body. The secure element comprises first and second means. First means is able to run application-oriented commands and second means is able to run file-oriented commands. Said first means is able to generate a clear body by deciphering the body. Said first means is adapted to check if the clear body contains an element having a preset value. Said first means is adapted to build a file-oriented command from the clear body. Said first means is adapted to forward the file-oriented command to said second means.

Advantageously, a server may have generated the application-oriented command. Said second means may be able to generate a response to the file-oriented command and to send said response to the server via said first means.

Advantageously, said first means may be able to receive the application-oriented command through an application-oriented script and said first means may be able to forward the file-oriented command to said second means through a file-oriented script.

Advantageously, the secured element may be a Universal Integrated Circuit Card (UICC), an embedded UICC, a Machine-To-Machine device or a smart card.

Another object of the invention is a system comprising a server and a secure element as described above. The server comprises a generator means which is adapted to generate an application-oriented command by encapsulating a file-oriented command.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a secure element which communicates with a distant server via a host machine according to the invention;
- Figure 2 is an example of a system comprising a server and a secure element according to the invention and
- Figure 3 is an example of data which are successively generated according to the invention.

### (Detailed description of the preferred embodiments)

The invention may apply to any types of secure elements intended to contain a file system. In the following examples, the secure element is a Universal Integrated Circuit Card (UICC) but it could be any other kind of secure element. In particular, the secure element may be an embedded Universal Integrated Circuit Card (eUICC) which is a non-removable UICC. Such a eUICC may be welded into a host device. In this specification, the secure element is connected to a host machine. In particular, the host machine may be a mobile phone, a tablet or a telecom terminal. The secure element accesses a remote server through the host machine.

The present invention relies on the encapsulating of a file-oriented command into an application-oriented command and on the sending of commands to the secure element so that security features of application-oriented mechanism benefits also to the file-oriented commands.

Thanks to the invention, the server always sends commands to a single agent (i.e. the agent dedicated to application-oriented command) whatever the real target of the commands.

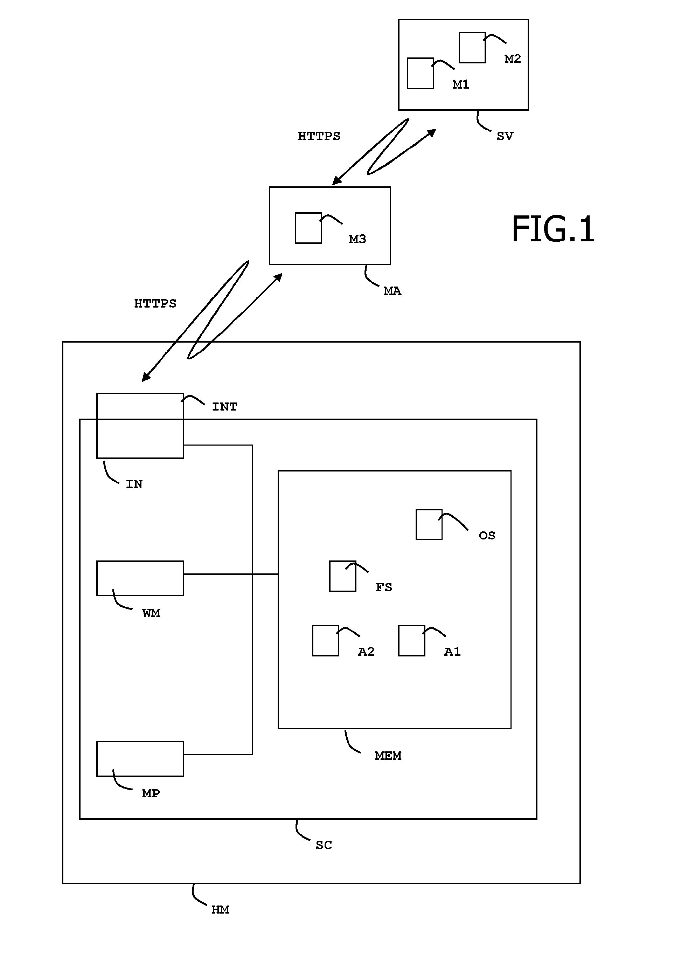

**Figure 1** shows the architecture of a secure element SC connected to a host machine HM and exchanging messages with a server SV according to a preferred embodiment of the invention.

The secure element SC is a UICC and comprises a working memory WM of RAM type, a non volatile memory MEM, a microprocessor MP and a communication interface IN. The non volatile memory MEM comprises an operating system OS which may contain a Virtual Machine.

The non volatile memory MEM comprises a file system FS and two means A1 and A2.

The memory MEM may be implemented as any combinations of one, two or more memories. These memories may be any kind of non volatile memory (for example: NAND flash or EEPROM memory).

The UICC SC is intended to exchange messages with a telecom handset HM through the communication interface IN. The telecom handset HM is intended to communicate with the UICC with a dedicated communication interface INT. The telecom handset HM is intended to exchange messages with a distant machine MA via the OTA mechanism. The machine MA is able to communicate with the server SV by using a secured communication channel. The machine MA is in charge of the transportation of the data between the server SV and the secure element SC. Thus the UICC SC may exchange messages with a distant server SV through the connected host machine HM and through the machine MA.

The means A2 is an agent able to manage and to run file-oriented commands. In other words, the means A2 is adapted to execute commands which target a file system. For instance, the UpdateRecord command (as defined by ETSI 102 221 standard) is a file-oriented command. In a preferred embodiment, the means A2 may be a Remote File Management (RFM) agent.

The means A1 is an agent able to manage and to run application-oriented commands. In other words, the means A1 is capable of executing commands which target an application. For instance, the Install command (as defined by GlobalPlatform standard) is an application-oriented command. In a preferred embodiment, the means A1 may be a Remote Application Management (RAM) agent. The means A1 is able to receive an application-oriented command and an application-oriented script from the distant server SV.

The means A1 is able to decipher the body of a received application-oriented command and to check if the deciphered body contains an element having a preset value. For example, the element may be the first field (or byte) of the deciphered body. In case of successful check, the means A1 is able to build a file-oriented command from the deciphered body and to send this file-oriented command to the means A2. In a preferred embodiment, the means A1 is able to decipher the body by using SCP03 mechanism as defined by GlobalPlatform Card Specification v2.2 Amendment D version 1.1. The SCP03 mechanism provides a security level which is better than the security level of the RFM mechanism (defined by ETSI 102 225).

In case of unsuccessful check, the means A1 is adapted to run the received application-oriented command.

The means A2 is capable of running the file-oriented command and to generate a response RE to this command. The means A2 is able to send the response RE to the means A1 so that the means A1 forwards this response RE to the server SV.

In the example of Figure 1, the server SV comprises a means M2 capable of generating a file-oriented command FC1. A machine MA comprises a means M3 capable of managing the secure transport of data for accessing the host machine HM and the secure element SC. For example, the machine MA is an Over-The-Air server.

The server SV comprises a generator means M1 which is capable of generating an application-oriented command AC1 by encapsulating the file-oriented command FC1. The server SV is able to send the application-oriented command AC1 to the secure element SC via the machine MA. For instance the server SV may send the command AC 1 to the machine MA by using a secure communication session based on wireless or wired channel. Then the machine MA forwards this command to the secure element SC through HTTPS or SMS as defined by ETSI 102.225.

Alternatively, the means M2 may be embedded in a third machine. (Not shown at Figure 1) In this case, the file-oriented command FC1 is generated into the third machine and securely sent to the server SV.

Alternatively, the machine MA and the server SV may be merged in a single machine.

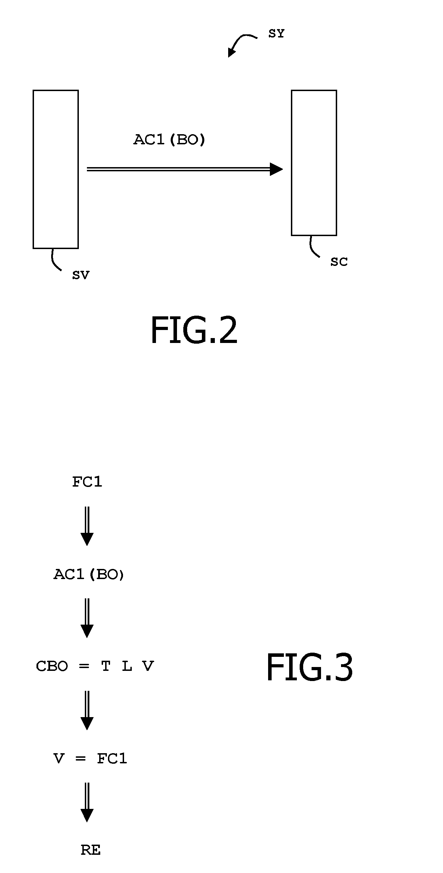

**Figure 2** shows an example of a system comprising a server SV and a secure element SC according to the invention.

The secure element SC of Figure 2 is similar to the secure element of Figure 1. Although the host machine HM is not drawn on Figure 2, the message exchanges between the server SV and the secure element SC are assumed to be forwarded by an intermediate host machine.

In this example, the server SV is a remote machine able to manage OTA messages according to ETSI 102 225 and 3GPP 31.115 standard and able to manage HTTPS messages.

Alternatively, the distant server SV may be able to manage HTTPS messages only. In this case a second machine is able to manage OTA messages. This second machine may be a remote administration server and the distant server SV may be an HTTP application server.

**Figure 3** shows an example of data which are successively generated according to the invention.

First, a file-oriented command FC1 is generated and provided to the server SV. The server SV builds an application-oriented command AC1 whose body BO is ciphered by using the security layer of the used application-oriented mechanism. This body BO comprises the file-oriented command FC1. For example, a clear body CBO of the application-oriented command AC1 is built at a first stage. This clear body CBO may comprise a TLV (data structured in Tag-Length-Value) pattern. The T part contains a specific value which means that the clear body CBO contains a file-oriented command. For instance the specific value may be "OxAA". The L part contains the length of the subsequent data. The V part may contain the file oriented command FC1 or some nested TLV with different tag values. The V part of those nested TLV would contain a file-oriented command FC1. For example, the FC1 command may be an Application Protocol Data Unit (APDU) compliant with the following syntax CLA INS Pl P2 as defined by IS07816 standard. For instance, an UpdateRecord command may be coded as < 0x00DC010403010203 > where the value "010203" is to be written into the record number #01 of the currently selected file.

At a first stage, the clear body CBO is ciphered by using the security layer of the used application-oriented mechanism. For instance, the clear body CBO is ciphered thanks to SCP03.

In a preferred embodiment, the application-oriented command AC1 is the Store Data command as defined by GlobalPlatform standard.

Then the command AC1 is sent from the server SV to the means A1. The means A1 deciphers the received command AC1 and extracts the clear body CBO which comprises the TLV frame. The means A1 builds the file-oriented command FC1 and sent it to the means A2.

After receipt of this command FC1, the means A2 executes the command FC1 and generates a response RE. Then the means A2 sends the response RE to the server SV thanks to the means A1.

It is to be noted that the means A1 is able to automatically identify the means A2 which is targeted by the file-oriented command and vice versa. For example, the two means A1 and A2 may be associated to a single security domain as defined by GlobalPlatform version 2.2. The means A1 may contain an identifier of (or a reference to) the means A2.

Advantageously, the application-oriented command AC1 may comprise a file-oriented script. For example, the V part of the clear body CBO may comprise a script containing several file-oriented commands or several nested TLV, each nested TLV comprising a file-oriented command. In this case, the response RE may be computed as the result of each command sending out-going data, if any. Alternatively, the response RE may be computed as the result of the last executed command of the script.

Advantageously, the application-oriented command AC1 may be part of an application-oriented script which is sent from the server SV to the secure element SC.

The invention allows establishing a secured tunneling between the server SV and the secure element SC. Assuming that both the server SV and the secure element SC are trusted elements, the invention allows to send file-oriented commands between these two elements even if the intermediary machine MA is not a trusted element.

Although secure elements have been described as being hardware device, they may also be implemented as pure software components. The present invention applies to both hardware and software secure elements.

## Claims

1. A **method** of sending a file-oriented command (FC1) to a secure element (SC) comprising a first means (A1) able to run application-oriented commands and a second means (A2) able to run file-oriented commands,
**characterized in that** said method comprises the steps of:
a) in a server (SV), generating an application-oriented command (AC1) by encapsulating the file-oriented command (FC1), said application-oriented command (AC1) having a body (BO),
b) sending the application-oriented command (AC1) to the secure element (SC),
c) generating a clear body (CBO) by deciphering said body (BO) by said first means (A1),
d) if the clear body (CBO) contains an element having a preset value (T), then building the file-oriented command (FC1) from the clear body (CBO) and forwarding the file-oriented command (FC1) from said first means (A1) to said second means (A2).

2. A method according to claim 1, wherein said method comprises the further steps of:
e) executing the file-oriented command (FC1) by said second means (A2) and generating a response (RE) to the file-oriented command (FC1),
f) sending the response (RE) to the server (SV) via said first means (A1).

3. A method according to one of claims 1 to 2, wherein said first means (A1) complies with Remote Application Management as defined by ETSI 102 226 standard and said second means (A2) complies with Remote File Management as defined by ETSI 102 226 standard.

4. A method according to one of claims 1 to 3, wherein the file-oriented command (FC1) is forwarded to said second means (A2) through a file-oriented script and wherein the application-oriented command (AC1) is sent to the secure element (SC) through an application-oriented script.

5. A **secure element** (SC) intended to receive an application-oriented command (AC1) comprising a body (BO), said secure element (SC) comprising a first means (A1) able to run application-oriented commands and a second means (A2) able to run file-oriented commands, said first means (A1) being able to generate a clear body (CBO) by deciphering the body (BO),
**characterized in that** said first means (A1) is adapted to check if the clear body (CBO) contains an element having a preset value (T), to build a file-oriented command (FC1) from the clear body (CBO) and to forward the file-oriented command (FC1) to said second means (A2).

6. A secure element (SC) according to claim 5, wherein said application-oriented command (AC1) has been generated in a server (SV) and wherein said second means (A2) is able to generate a response (RE) to the file-oriented command (FC1) and to send said response (RE) to the server (SV) via said first means (A1).

7. A secure element (SC) according to one of claims 5 to 6, wherein said first means (A1) complies with Remote Application Management as defined by ETSI 102 226 standard and said second means (A2) complies with Remote File Management as defined by ETSI 102 226 standard.

8. A secure element (SC) according to one of claims 5 to 7, and wherein said first means (A1) is able to receive the application-oriented command (AC1) through an application-oriented script and wherein said first means (A1) is able to forward the file-oriented command (FC1) to said second means (A2) through a file-oriented script.

9. A secure element (SC) according to one of claims 5 to 8, wherein said secured element (SC) is an UICC, an embedded UICC, a Machine-To-Machine device or a smart card.

10. A **system** (SY) comprising a server (SV) and a secure element (SC),
**characterized in that** the secure element (SC) is according to claim 5 and **in that** said server (SV) comprises a generator means (M1) adapted to generate an application-oriented command (AC1) by encapsulating a file-oriented command (FC1).
